# EUROPEAN PATENT APPLICATION

(11) **EP 2 236 383 A2**
(43) Date of publication of application: **06.10.2010**
(21) Application number: 09251769.7
(22) Date of filing: 09.07.2009
(51) Int. Cl.: B61D 27/00, B60H 1/32

(54) **Heat pump air conditioning system for railway vehicle**

(30) Priority: 31.03.2009 JP 2009084276
(71) Applicant: Hitachi, Ltd., Chiyoda-ku Tokyo 100-8280 (JP)
(72) Inventor: Hirakawa, Haruo, Tokyo 100-8220 (JP); Akimaru, Daisuke, Tokyo 100-8220 (JP)
(74) Representative: Paget, Hugh Charles Edward

(57) **Abstract**

The invention provides a heat pump air conditioning system for railway vehicles that realizes continuous heating operation. In a heat pump refrigeration cycle, first solenoid valves (7 and 8) are disposed on inlet pipes (13 and 14) that split the flow from an inlet side of the outdoor heat exchanger (evaporator) (4). Solenoid valves (9 and 10) are disposed on bypass pipes (15 and 16) connecting the outlet of the first solenoid valves (7 and 8) and the outlet of a compressor (1). Hot gas from the outlet of the compressor (1) is supplied to half the paths of the outdoor heat exchanger (4) so as to remove the frost deposited on heat exchanger tubes etc., and after the elapse of a predetermined time, the paths are switched so that hot gas is supplied to the remaining paths. According to this arrangement, the reduction of evaporation temperature is prevented and the frost formation on the outdoor heat exchanger (evaporator) is suppressed, so that frost can be removed during continuous heat pump heating operation, and the comfort within the cabin of the railway vehicle is maintained.

## Description

### BACKGROUND OF THE INVENTION

### Field of the invention

The present invention relates to a heat pump air conditioning system applied to railway vehicles for performing cooling and heating operations via heat pumps.

### Description of the related art

Conventionally, a heat pump air conditioning system having a heat pump refrigeration cycle for performing both cooling and heating operations has been adopted as a cooling and heating system for railway vehicles. During heating operation, the air conditioning system for railway vehicles equipped with a heat pump refrigeration cycle connects an outlet port of a compressor, one of the flow paths of a four-way switching valve, an indoor heat exchanger (condenser), an expansion valve (decompressor), an outdoor heat exchanger (evaporator), another flow path of the four-way switching valve, and an inlet port of the compressor in the named order to form the refrigeration cycle. A plurality of refrigerant flow paths (paths) are provided in the indoor heat exchanger and the outdoor heat exchanger so as to reduce the pressure loss of the refrigerant. In addition to the above-mentioned components, the present air conditioning system having a heat pump refrigeration cycle includes an inverter for controlling the compressor, a control unit, a control panel, various sensors (such as an indoor temperature sensor, an indoor humidity sensor, an ambient air temperature sensor, an ambient air humidity sensor and a sensor for detecting boarding rate) and a console.

The air conditioning system for a railway vehicle having the heat pump refrigeration cycle arranged as above is operated as a heat pump cycle during heating operation, in which a high pressure refrigerant compressed by the compressor is sent to an indoor heat exchanger (condenser) and condensed, hot air subjected to heat exchange within the indoor heat exchanger (condenser) is sent into the cabin via an indoor fan, and the condensed refrigerant is expanded via an expansion valve and sent to an outdoor heat exchanger (evaporator), where heat exchange is performed between an outdoor heat exchanger (evaporator) and air flow using an outdoor fan. The opposite operation is performed for cooling operation, wherein the high pressure refrigerant compressed via a compressor is sent to the outdoor heat exchanger (condenser) and condensed, where the refrigerant is cooled via heat exchange between the outdoor heat exchanger (condenser) and air flow sent via the outdoor fan, and the condensed refrigerant is expanded via the expansion valve and sent to the indoor heat exchanger (evaporator), where air being sent via the indoor fan and subjected to heat exchange with the indoor heat exchanger (evaporator) is sent into the cabin.

According to such air conditioning system for a railway vehicle equipped with a heat pump refrigeration cycle, in order to perform heating operation using the air conditioning system during winter season, the temperature of the refrigerant flowing through the outdoor heat exchanger is set cooler than ambient air so that the cool refrigerant takes away heat from ambient air in the outdoor heat exchanger and evaporates. When the ambient air passing through the outdoor heat exchanger is cooled to below freezing point, frost formation occurs often to the outdoor heat exchanger. Especially in railway vehicles that travel through cold regions in the winter season, the outdoor heat exchanger disposed outside the vehicle is exposed to severe weather conditions, and frost formation becomes remarkable.

Conventionally, when frost formation occurred to the outdoor heat exchanger, the compressorwas stoppedperiodicallyto remove the frost, or the air conditioning system was switched to cooling operation when frost formation on the outdoor heat exchanger was detected so as to operate the outdoor heat exchanger as a condenser. According to such methods, however, the heating operation of the air conditioning system must be stopped even for a short time during frost removal.

As described, when the air conditioning system for a railway vehicle equipped with the heat pump refrigeration cycle performs heat pump heating operation when the ambient air is below freezing point, frost formation occurs to the outdoor heat exchanger and the air flow rate drops, according to which the amount of heat absorption from ambient air becomes insufficient and the evaporation temperature shows an abnormal drop. In order to cope with this situation, frost was removed by stopping the heat pump heating operation and switching the operation to a cooling cycle so as to supply hot gas to the outdoor heat exchanger, but since the heating operation was stopped during frost removal, there was a drawback in that the cabin temperature dropped, and the passengers felt chilly.

One example of an air conditioning system for railway vehicle is disclosed in Japanese patent application laid-open publication No. 2002-362359, hereinafter referred to as patent document 1.

The problem to be solved in an air conditioning system for a railway vehicle having a heat pump refrigeration cycle in which the heat pump heating operation is performed in a low ambient air temperature, such as below freezing point, is to enable frost removal without completely stopping the heating operation, by focusing on the flow of high temperature refrigerant gas discharged from the compressor and elaborating the flow paths thereof.

### SUMMARY OF THE INVENTION

The present invention aims at solving the problems of the prior art by providing a heat pump air conditioning system for a railway vehicle capable of realizing continuous heating operation via a heat pump refrigeration cycle in which the heat pump heating operation is performed when the outside air temperature is low, such as below freezing point, by preventing abnormal drop of evaporation pressure due to frost formation on the outdoor heat exchanger and preventing failures caused by the drop of suction pressure of the compressor.

The present invention provides a heat pump air conditioning system for a railway vehicle having a heat pump refrigeration cycle in which a compressor, an indoor heat exchanger, an expansion valve and an outdoor heat exchanger are connected via pipes in the named order, comprising an inlet of a branch pipe connected to an outlet of the expansion valve, a plurality of outlets of the branch pipe and the inlets of a plurality of refrigerant flowpaths disposed within the outdoor heat exchanger connected via a plurality of inlet pipes, the inlet pipes provided with a plurality of first valves for controlling the flow rate of the refrigerant, the inlet of the branch pipe being connected to an outlet port of the compressor, and the plurality of outlets of the branch pipes and the plurality of inlet pipes at the outlet side of the first valve being connected via a plurality of bypass pipes, wherein the plurality of bypass pipes are equipped with a plurality of second valves for controlling the flow rate of the refrigerant.

According to the present heat pump air conditioning system for railway vehicles, the plurality of inlet pipes having pipe paths connected from the indoor heat exchanger via the expansion valve to the outdoor heat exchanger branched via a branch pipe are connected to respective flow paths within the outdoor heat exchanger, and the outlet of the branch pipe connected to the discharge port of the compressor and a plurality of the inlet pipes are connected via bypass pipes, wherein the respective inlet pipes and the bypass pipes are provided with first and second valves. Therefore, by closing the first valves disposed on the respective inlet pipes having been split, and opening the second valves disposed on the bypass pipes of the corresponding line, a portion of the hot gas discharged from the compressor can be supplied directly to a portion of the paths in the outdoor heat exchanger connected to the inlet pipes without passing through the indoor heat exchanger. Thereby, the frost formed on the heat exchanger tubes and fins corresponding to the paths through which the hot gas is supplied in the outdoor heat exchanger is removed. Since the hot gas flow from the compressor to the indoor heat exchanger is also ensured, the indoor heat exchanger maintains its function as a condenser, and since the same refrigerant as when performing heating operation is flown through the remaining paths, the outdoor heat exchanger partially functions as an evaporator, and the heating operation is continuously performed. By switching the paths sequentially, frost removal of the outdoor heat exchanger is performed, by which the drop of evaporation temperature in the evaporator is prevented and the deterioration of heating performance is suppressed. As described, frost removal can be performed while continuously performing heat pump heating operation.

As described, according to the heat pump air conditioning system of the present invention, a portion of the hot gas discharged from the compressor can be bypassed and supplied to a portion of the refrigerant flow paths of the outdoor heat exchanger without passing through the indoor heat exchanger, so that the frost formed on the surface of the heat exchanger tubes and fins corresponding to the above-described refrigerant flow paths can be melted. On the other hand, the remaining hot gas that had not been bypassed is supplied to the indoor heat exchanger, so that the heating operation is not stopped altogether but continued. Further, frost is formed with time on the surface of heat exchanger tubes and fins corresponding to refrigerant flow paths of the outdoor heat exchanger to which hot gas is not supplied, but by sequentially switching the refrigerant flow paths through which hot gas is supplied, hot gas can be flown through all the paths of the outdoor heat exchanger, preventing the progression of frost formation on, or removing frost from, the surface of heat exchanger tubes (a portion of the refrigerant flow paths) constituting the outdoor heat exchanger and fins provided on the heat exchanger tubes. As described, since frost formation on the outdoor heat exchanger (evaporator) can be suppressed according to heat pump heating operation under low temperature environment such as below freezing point, the present invention prevents abnormal drop of evaporation pressure and failures due to drop of suction pressure of the compressor caused by the frost formation on the outdoor heat exchanger, realizes continuous heating operation using the heat pump refrigeration cycle, and presenting drop of cabin pressure so as to maintain comfort within the cabin.

### BRIEF DESCRIPTION OF THE DRAWINGS

FIG. 1 is a structural diagram showing one example of a refrigeration cycle used in a heatx pump air conditioning system for a railway car according to the present invention, illustrating the refrigerant flow during heating operation;
FIG. 2 is a view illustrating the path configuration of an outdoor heat exchanger and the arrangement of solenoid valves on inlet pipes in the refrigeration cycle illustrated in FIG, 1;
FIG. 3 is a view showing the operation modes and control patterns of solenoid valves corresponding to outside air temperatures according to the heat pump air conditioning system for railway vehicles of the present invention;
FIG. 4 is a view showing a timing chart of solenoid valves adopted in the refrigeration cycle illustrated in FIG. 1;
FIG. 5 is a block diagram showing the configuration of a control unit of the refrigeration cycle illustrated in FIG. 1; and
FIG. 6 is a view showing a timing chart of solenoid valves according to another embodiment of the heat pump air conditioning system for railway vehicles of the present invention.

### DETAILED DESCRIPTION OF THE PREFERRED EMBODIMENTS

Now, the preferred embodiments of a heat pump air conditioning system for railway vehicles according to the present invention will be described with reference to the drawings.

### [Embodiment 1]

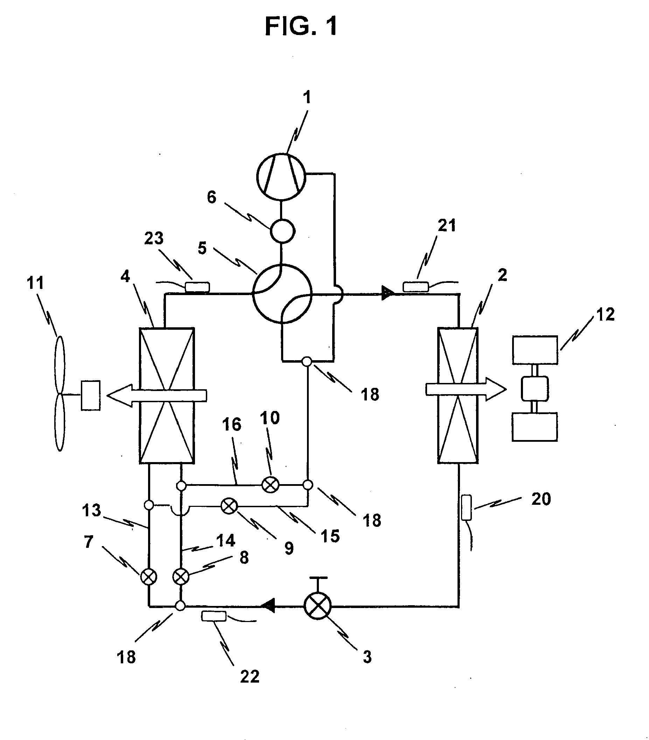

In the configuration diagram of FIG. 1 illustrating a refrigeration cycle, a high temperature and high pressure gas refrigerant discharged from a compressor 1 passes through a four-way switching valve 5, which is cooled by the circulating air in the cabin in an indoor heat exchanger 2 (condenser) (by which the circulating air is heated), and turns into high pressure liquid refrigerant. The high pressure liquid refrigerant is decompressed by a motor-operated expansion valve 3, draws heat from the outside air in an outdoor heat exchanger 4 (evaporator) to turn into low pressure gas refrigerant, and is returned via the four-way switching valve 5 and an accumulator 6 to the compressor 1.

The outdoor heat exchanger 4 is equipped with an outdoor fan 11 so as to send outside air through the outdoor heat exchanger 4 for heat exchange, and the indoor heat exchanger 2 is equipped with an indoor fan 12 so as to send the air in the cabin through the indoor heat exchanger 2 for heat exchange. An inlet pipe communicating the motor-operated expansion valve 3 and the outdoor heat exchanger 4 is split via a branch pipe 18 into two split lines of inlet pipes 13 and 14, and the split flow of inlet pipes 13 and 14 are provided with first solenoid valves 7 and 8, respectively, for opening and closing the refrigerant flow paths of the main circuit. Further, a branch pipe 18 disposed on the pipe communicating the compressor 1 and the indoor heat exchanger 2 at the outlet-side of the compressor 1 splits the flow into a pipe leading to the indoor heating exchanger 2 and pipes connected to bypass pipes 15 and 16 connected respectively to inlet pipes 13 and 14 of the outdoor heat exchanger 4. The bypass pipes 15 and 16 are equipped with second solenoid valves 9 and 10 for respectively opening and closing the refrigerant flow paths of bypass pipes 15 and 16.

Further, temperature sensors 20 and 21 (for cooling operation) are attached to the inlet and outlet of the indoor heat exchanger 2, and temperature sensors 22 and 23 (for heating operation) are attached to the inlet and outlet of the outdoor heat exchanger 4. The temperature difference of the refrigerant is detected via the temperature sensors 20 and 21 or temperature sensors 22 and 23, and by controlling the valve operation of the motor-operated expansion valve 3, the refrigerant flow rate is controlled so as to maintain a constant refrigerant temperature deviation.

The present embodiment discloses a method for bypassing a portion of the hot gas at the outlet of the compressor 1 to the outdoor heat exchanger 4 without passing the same through the indoor heat exchanger 2 through a simple opening and closing operation of the first solenoid valves 7 and 8 and the second solenoid valves 9 and 10, but the present invention is not restricted to such embodiment, and the present invention can include a refrigeration cycle configuration in which the bypass flow rate can be controlled arbitrarily by operating the second solenoid valves 9 and 10 as motor-operated valves and controlling the valve openings thereof.

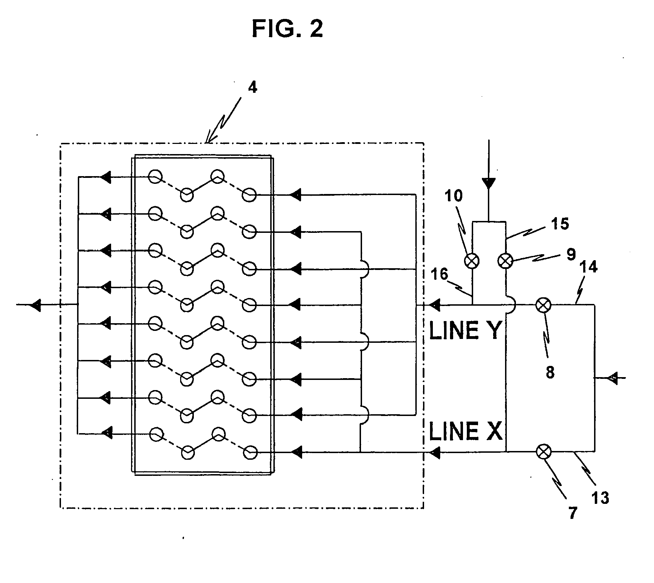

As shown in FIG. 2, the pass configuration of the outdoor heat exchanger 4 is designed to split the flow into two lines, line X and line Y. In other words, in the outdoor heat exchanger 4, the paths are arranged so that the refrigerant flows alternately through the two lines arranged in the stepwise direction, that is, the height direction of the heat exchanger. The second solenoid valves 9 and 10 are alternately opened to directly bypass the high temperature gas refrigerant discharged from the compressor 1 to half the paths of the outdoor heat exchanger 4.

The gas refrigerant flowing through half the paths of the outdoor heat exchanger 4 melts the frost on the heat exchanger tubes and fins, converges with the gas refrigerant having absorbed heat from the ambient air and evaporated in the outdoor heat exchanger 4, and passes through the four-way switching valve 5 and the accumulator 6 to be returned to the compressor 1. The refrigerant having returned to the compressor cools the motor disposed in the compressor 1.

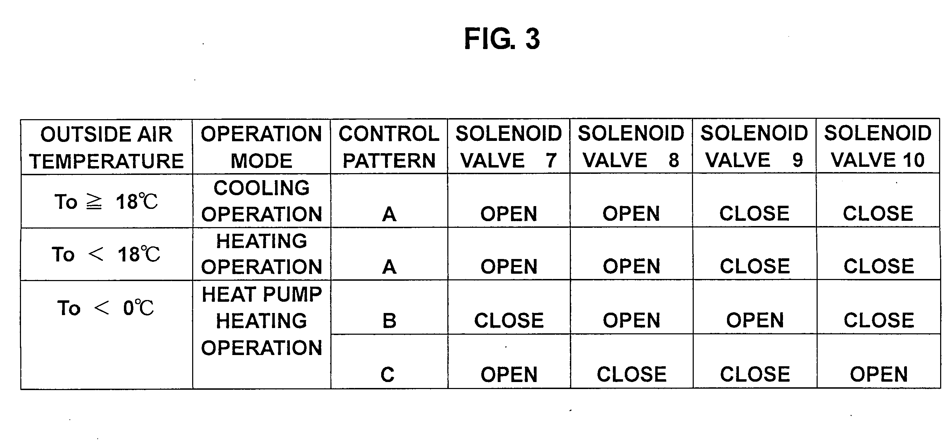

An example of the control patterns for controlling the first solenoid valves 7 and 8 and the second solenoid valves 9 and 10 are illustrated in FIG. 3. For example, cooling operation is performed when the ambient air temperature is 18 °C or higher, and heating operation is performed when the ambient air temperature is below 18 °C. The control pattern of the respective solenoid valves in this case is pattern A, which represents a general refrigerant flow for both the cooling and heating operations, wherein the solenoid valves 7 and 8 are opened and solenoid valves 9 and 10 are closed.

When the ambient air temperature is below freezing point during heating operation, the control pattern of the solenoid valves is switched to pattern B, where the hot gas from the compressor outlet is flown through line X. In pattern B, the solenoid valves 8 and 9 are opened, and solenoid valves 7 and 10 are closed. Thereafter, after the elapse of a predetermined time, the control pattern of the solenoid valves is switched to pattern C, where the hot gas from the compressor outlet is flown through line Y. In pattern C, solenoid valves 7 and 10 are opened and solenoid valves 8 and 9 are closed. Pattern B and pattern C are alternately switched repeatedly per elapse of a predetermined time.

During heat pump heating operation when the ambient air temperature is below freezing point, the gas refrigerant discharged from the compressor 1 is bypassed via the bypass circuits 15 and 16 to the outdoor heat exchanger 4, so that the flow rate of refrigerant flowing to the indoor heat exchanger 2 is reduced and the heating performance is deteriorated. Therefore, the bypass flow rate should be set to the minimum necessary amount. Further, during heating operation when the ambient air temperature is below freezing point, the heat exchange quantity of the outdoor heat exchanger 4 is reduced, so that the opening of the motor-operated expansion valve 3 is narrowed down and the refrigerant flow rate is reduced in order to prevent the non-evaporated liquid refrigerant from returning to the compressor 1. However, since the outdoor heat exchanger is susceptible to frost formation when the evaporation pressure decreases, a minimum opening of the motor-operated expansion valve 3 is determined so as not to narrow the opening down to below a predetermined opening. This minimum opening is obtained via tests.

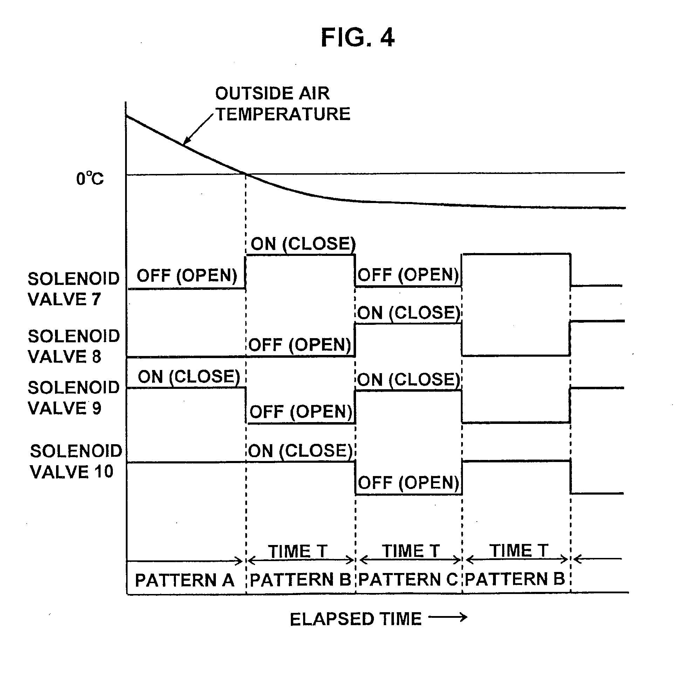

As shown in the timing chart of FIG. 4, during heat pump heater operation when the ambient air temperature is 0 °C or greater, the solenoid valves 7 and 8 are opened and the solenoid valves 9 and 10 are closed. Therefore, there is no flow of refrigerant that bypasses the indoor heat exchanger 2. When the ambient air temperature falls below freezing point, the solenoid valve 7 is closed and the solenoid valve 9 is opened for time T to let hot gas flow through line X. Next, solenoid valves 8 and 9 are closed and solenoid valves 7 and 10 are opened for time T to let hot gas flow through line Y. By alternately switching the open/close control pattern of the solenoid valves 7 and 8 and solenoid valves 9 and 10 between pattern B and pattern C, the lines composed of refrigerant flow paths (paths) for flowing hot gas is switched from line X to line Y or from line Y to line X after the passing of a predetermined time. The switching time T is obtained via tests to determine the time in which the moisture in the air causes frost formation on the fins of the outdoor heat exchanger 4 and the amount of air passing therethrough starts to drop significantly.

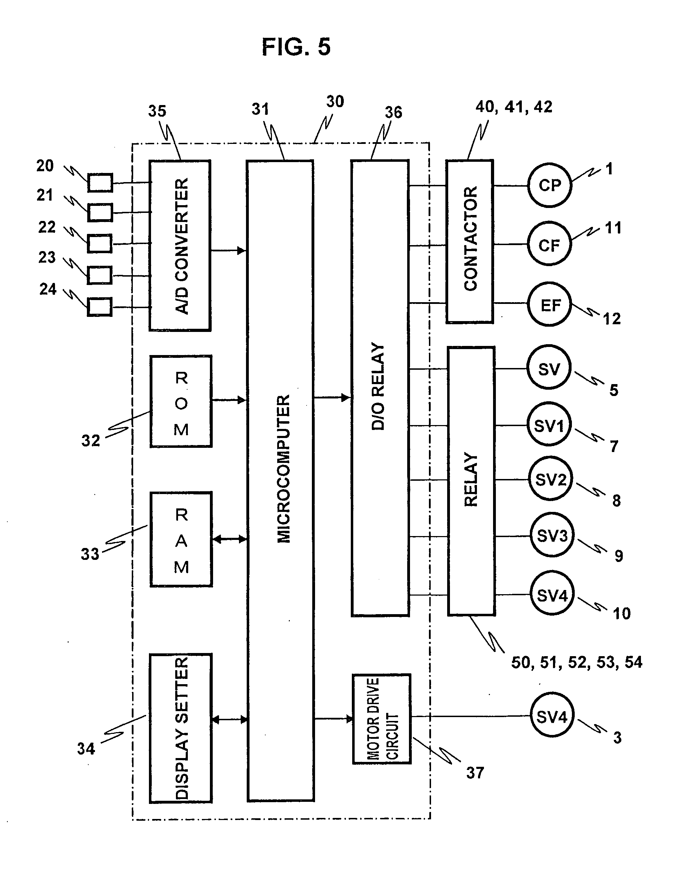

Next, with reference to FIG. 5, a control unit (controller) according to the embodiment of the heat pump air conditioning system shown in FIG. 1 is described. Reference number 30 denotes a controller, wherein a microcomputer 31, which is the main component of the controller, executes various computations and comparative determinations based on the commands of execution programs stored in a ROM (read only memory) 32. A RAM (random access memory) 33 is for temporarily storing various data, and reference number 34 denotes a display setter for entering the preset temperature for the cabin or for displaying the operation statuses of the compressor 1, the outdoor blower 11 and the indoor blower 12, both of which are connected to the microcomputer 31.

The analog data related to the temperature detected via an inlet pipe temperature sensor 20 and an outlet pipe temperature sensor 21 of the indoor heat exchanger 2, an inlet pipe temperature sensor 22 and an outlet pipe temperature sensor 23 of the outdoor heat exchanger 4 and an indoor temperature sensor 24 are converted to digital data via an A/D converter 35, and entered to the microcomputer 31.

The compressor 1, the outdoor fan 11 and the indoor fan 12 are subjected to operation control by having contactors 40, 41 and 42 switched on and off via noncontact output of a DO (digital output) relay 36. The four-way switching valve 5 and the solenoid valves 7, 8, 9 and 10 are subjected to operation control by having relays 50, 51, 52, 53 and 54 switched on and off via noncontact output of the DO relay 36.

During cooling operation, the opening of the motor-operated expansion valve 3 is controlled via the pulse output from a motor drive circuit 37 so that the detected temperature difference between the inlet pipe temperature sensor 20 and the outlet pipe temperature sensor 21 of the indoor heat exchanger 2 is set to a predetermined value, and during heat pump eating operation, the opening of the valve 3 is controlled so that the detected temperature difference between the inlet pipe temperature sensor 22 and the outlet pipe temperature sensor 23 of the outdoor heat exchanger 4 is set to a predetermined value.

### [Embodiment 2]

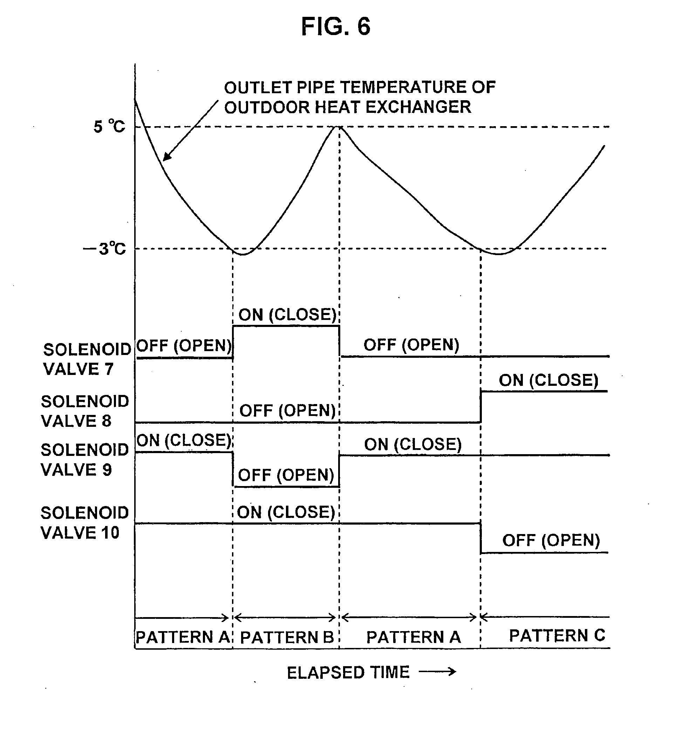

Another method for controlling the heat pump air conditioning system according to the present invention is described with reference to FIG. 6. FIG. 6 shows one example of a time chart of solenoid valves for bypassing the hot gas from the outlet of the compressor 1 to the outdoor heat exchanger 4 when the detected value of the outlet pipe temperature sensor 23 of the outdoor heat exchanger 4 falls to or below -3 °C in the refrigeration cycle line chart during heat pump heating operation illustrated in FIG. 1.

In the time chart of FIG. 6, when the opening of the motor-operated expansion valve 3 is fixed to minimum opening, the evaporation temperature of the outdoor heat exchanger 4 drops simultaneously as when ambient air temperature drops. When the outlet refrigerant temperature of the outdoor temperature exchanger 4 falls to or below -3 °C, the control pattern of the solenoid valves is switched to pattern B so as to prevent frost formation on the heat exchanger tubes and fins, according to which hot gas is supplied to line X. As a result, when the evaporation temperature of the outdoor heat exchanger 4 is raised to 5 °C or higher, the control pattern is returned to the normal pattern A, and the next time the outlet refrigerant temperature of the outdoor heat exchanger 4 falls to or below -3 °C, the pattern is switched this time to pattern C, according to which the solenoid valves are controlled to supply hot gas to line Y.

By switching the paths of heat exchanger tubes where heat is absorbed via heat exchange with the ambient air and the paths of heat exchanger tubes where frost is removed via hot gas each time the outlet refrigerant temperature of the outdoor heat exchanger 4 falls to or below -3 °C, continuous operation of the heat pump becomes possible. In other words, since the amount of frost formed on the fins of the outdoor heat exchanger (evaporator) starts to increase significantly when the evaporation temperature falls to or below -3 °C, the heat quantity absorbed from the ambient air can be maximized by detecting this temperature and controlling the solenoid valves to supply hot gas to the outdoor heat exchanger (evaporator), and the deterioration of heating performance can be suppressed to a minimum.

According to the above-illustrated embodiment, the refrigerant flow path is split into two lines, however, the refrigerant flow path can be split to three or more lines. In that case, the frost formation on the heat exchanger tubes and fins constituting the outdoor heat exchanger and the removal of frost therefrom can be performed by sequentially switching the inlet pipes to which the hot gas is bypassed so as to sequentially change the refrigerant flow paths in which frost removal is performed, and to repeat the same for all the lines in cycles.

## Claims

1. A heat pump air conditioning system for a railway vehicle having a heat pump refrigeration cycle in which a compressor, an indoor heat exchanger, an expansion valve and an outdoor heat exchanger are connected via pipes in the named order, comprising:
an inlet pipe split into a plurality of lines so that the respective lines are connected to a plurality of refrigerant flow paths formed in the outdoor heat exchanger;
first solenoid valves respectively disposed on each of the inlet pipes so as to control the flow of refrigerant in the inlet pipes;
a bypass pipe split into a plurality of lines so that the respective lines are connected to an outlet side of the first solenoid vales of the respective inlet pipes in such a manner as to bypass the indoor heat exchanger and connect to an outlet side of the compressor; and
second solenoid valves respectively disposed on each of the bypass pipes so as to open and close the respective bypass pipes.

2. The heat pump air conditioning system for a railway vehicle according to claim 1, wherein
the refrigerant flow paths are disposed successively in rows within the outdoor heat exchanger; and
the respective inlet pipes split into a plurality of lines are connected once or repeatedly for a plurality of times to the sequential refrigerant flow paths in order.

3. The heat pump air conditioning system for a railway vehicle according to claims 1 or 2, further comprising
a control unit for receiving input of detection signals from an ambient air temperature sensor for detecting the ambient air temperature and controlling the opening and closing of the first and second solenoid valves; wherein
upon detecting that the outside air temperature detected via the ambient air temperature sensor is below freezing point, the control unit closes the first solenoid valves disposed on the inlet pipes belonging to one of the plurality of lines, and opens the second solenoid valves disposed on the bypass pipes corresponding to said line, so as to bypass hot gas from the compressor outlet to the refrigerant flow paths belonging to said line.

4. The heat pump air conditioning system for a railway vehicle according to claim 3, wherein
the control unit sequentially switches said lines in order by performing valve operation to close the first solenoid valves and open the second solenoid valves corresponding to said first solenoid valves at certain cycles, so as to sequentially bypass the hot gas from the compressor outlet to the respective refrigerant flow paths of the plurality of lines in the outdoor heat exchanger at constant cycles and in order.

5. The heat pump air conditioning system for a railway vehicle according to claims 1 or 2, further comprising
a control unit for receiving input of detection signals from an outlet pipe temperature sensor for sensing the outlet pipe temperature of the outdoor heat exchanger and controlling the opening and closing of the first and second solenoid valves; wherein
upon detecting that the outlet pipe temperature detected by the outlet pipe temperature sensor is equal to or below a set minimum temperature, the control unit closes the first solenoid valves disposed on the inlet pipes belonging to one of the plurality of lines and opens the second solenoid valves disposed on the bypass pipes corresponding to said line so as to bypass hot gas from the compressor outlet to the refrigerant flow paths belonging to said line, and when the outlet pipe temperature becomes equal to or greater than a set maximum temperature, the control unit opens all the first solenoid valves and closes all the second solenoid valves so as to stop the bypassing of hot gas.

6. The heat pump air conditioning system for a railway vehicle according to claim 5, wherein
whenever the outlet pipe temperature becomes equal to or smaller than the set minimum temperature, the control unit sequentially switches said lines in order by performing valve operation to close the first solenoid valves and open the second solenoid valves corresponding to said first solenoid valves, so as to bypass the hot gas from the compressor outlet sequentially to each of the refrigerant flow paths of the plurality of lines in the outdoor heat exchanger sequentially and in order.

7. The heat pump air conditioning system for a railway vehicle according to any one of claims 3 through 6, wherein
the plurality of lines is composed of two lines, and the sequential switching of the lines in order is an alternative switching of the two lines.
